# FASCICULE DE BREVET EUROPEEN

(11) **EP 4 078 522 B1**
(45) Date de publication et mention de la délivrance du brevet: **30.07.2025**
(21) Numéro de dépôt: 20848716.5
(22) Date de dépôt: 18.12.2020
(51) Int. Cl.: G06T 7/73

(54) **PROCÉDÉ DE SÉLECTION DE POINTS DE SURFACE À PARTIR D'UN MODÈLE CAO POUR LA LOCALISATION D'OBJETS 3D INDUSTRIELS, APPLICATION DE CE PROCÉDÉ À LA LOCALISATION D'OBJETS 3D INDUSTRIELS, ET SYSTÈME DE RÉALITÉ AUGMENTÉE EXPLOITANT DES OBJETS 3D AINSI LOCALISÉS**
VERFAHREN ZUM AUSWÄHLEN VON OBERFLÄCHENPUNKTEN AUS EINEM CAD-MODELL ZUM LOKALISIEREN VON INDUSTRIELLEN 3D-OBJEKTEN, ANWENDUNG DIESES VERFAHRENS ZUM LOKALISIEREN VON INDUSTRIELLEN 3D-OBJEKTEN UND SYSTEM DER ERWEITERTEN REALITÄT, DAS DIE SO LOKALISIERTEN 3D-OBJEKTE VERWENDET
METHOD FOR SELECTING SURFACE POINTS FROM A CAD MODEL FOR LOCATING INDUSTRIAL 3D OBJECTS, APPLICATION OF THIS METHOD TO THE LOCATION OF INDUSTRIAL 3D OBJECTS, AND AUGMENTED REALITY SYSTEM USING 3D OBJECTS THUS LOCATED

(30) Priorité: 18.12.2019 FR 1914696
(43) Date de publication de la demande: 26.10.2022
(73) Titulaire: Dassault Systèmes, 78140 Vélizy-Villacoublay (FR)
(72) Inventeur: BESBES, Bassem, 91120 PALAISEAU (FR)
(74) Mandataire: Atout PI Laplace
(86) Numéro de dépôt international: PCT/FR2020/052540
(87) Numéro de publication internationale: WO 2021/123671

(56) Documents cités:
- US-A1- 2018 348 854
- RAMESH RASKAR ET AL: "iLamps", ACM SIGGRAPH 2003 PAPERS, ACM US, 2 PENN PLAZA, SUITE 701 NEW YORK NY 10121-0701 USA, 1 July 2003 (2003-07-01), pages 809 - 818, XP058134370, ISBN: 978-1-58113-709-5, DOI: 10.1145/1201775.882349
- DAVID LINDLBAUER ET AL: "Combining Shape-Changing Interfaces and Spatial Augmented Reality Enables Extended Object Appearance", HUMAN FACTORS IN COMPUTING SYSTEMS, ACM, 2 PENN PLAZA, SUITE 701 NEW YORK NY 10121-0701 USA, 7 May 2016 (2016-05-07), pages 791 - 802, XP058257539, ISBN: 978-1-4503-3362-7, DOI: 10.1145/2858036.2858457
- "EUROGRAPHICS", 1 January 2001, SPRINGER VERLAG, VIENNA, AT, ISSN: 0946-2767, article RAMESH RASKAR ET AL: "Shader Lamps: Animating Real Objects With Image-Based Illumination", pages: 89 - 102, XP055286121, DOI: 10.1007/978-3-7091-6242-2_9
- LOESCH ANGELIQUE ET AL: "Localization of 3D objects using model-constrained SLAM", MACHINE VISION AND APPLICATIONS, SPRINGER VERLAG, DE, vol. 29, no. 7, 30 June 2018 (2018-06-30), pages 1041 - 1068, XP036603086, ISSN: 0932-8092, [retrieved on 20180630], DOI: 10.1007/S00138-018-0951-X
- BO WU ET AL: "Detection and Tracking of Multiple, Partially Occluded Humans by Bayesian Combination of Edgelet based Part Detectors", INTERNATIONAL JOURNAL OF COMPUTER VISION, KLUWER ACADEMIC PUBLISHERS, BO, vol. 75, no. 2, 11 January 2007 (2007-01-11), pages 247 - 266, XP019534969, ISSN: 1573-1405, DOI: 10.1007/S11263-006-0027-7
- EADE E ET AL: "Edge landmarks in monocular SLAM", IMAGE AND VISION COMPUTING, ELSEVIER, GUILDFORD, GB, vol. 27, no. 5, 2 April 2009 (2009-04-02), pages 588 - 596, XP026077880, ISSN: 0262-8856, [retrieved on 20080501], DOI: 10.1016/J.IMAVIS.2008.04.012

## Description

### DOMAINE DE L'INVENTON

La présente invention concerne un procédé de sélection de points de surface à partir d'un modèle CAO pour la localisation d'objets 3D industriels. Elle vise également l'application de ce procédé à la localisation d'objets 3D industriels ainsi qu'un système de réalité augmentée exploitant des objets 3D ainsi localisés.

Le domaine de l'invention est notamment celui des solutions de réalité augmentée, en particulier pour l'aide au montage et l'assemblage de pièces industrielles.

### ETAT DE LA TECHNIQUE

Il existe déjà des techniques de vision par ordinateur et d'apprentissage machine ou« machine learning » en anglais appliquées à des images acquises par un système de vision monoculaire RGB. Ces techniques sont à la fois peu onéreuses et faciles à mettre en œuvre parce qu'elles ne se reposent pas sur l'usage multi-capteur ou de capteurs 3D. Par ailleurs, elles ne nécessitent pas d'instrumentaliser la scène d'intérêt et de l'équiper avec des capteurs, des balises ou des marqueurs.

Mais on rencontre des difficultés de mise en œuvre lorsque la caméra utilisée est complètement mobile, en présence d'objets très réfléchissants et peu texturés et dans des conditions d'éclairage très variables. C'est en particulier le cas dans des environnements industriels pour lesquels les arrière-plans des scènes d'intérêt peuvent fortement varier, alors qu'on recherche une précision millimétrique de localisation.

On attend d'un système de localisation 6D basé sur un apprentissage qu'il ait la capacité d'estimer la pose de la caméra par rapport à un objet connu quel que soit l'arrière-plan, la position et l'orientation de l'objet et de la caméra et quelles que soient les conditions d'éclairage.

Une approche existante pour répondre à cette attente met en œuvre le concept de représentation BOF (« Bag of Features » en anglais ou « sac de caractéristiques ») qui implique une étape d'extraction de caractéristiques locales.

Une première phase, dite d'apprentissage, est réalisée hors ligne pour établir un modèle de représentation. Une seconde phase, dite phase de test, est réalisée en ligne et permet la localisation 3D de l'objet.

Durant la première phase, on extrait des descripteurs locaux à partir de l'ensemble d'images d'apprentissage pour construire un « sac de mots visuels », communément désigné par le sigle BOF (Bag Of Features). Ces descripteurs sont extraits à partir de zones d'intérêt localisées dans la région d'image où l'objet est présent. Les descripteurs locaux sont en effet des observations 2D de points 3D qui sont reconstruits par triangulation ou par la rétroprojection de points 2D sur la surface du modèle CAO.

Durant la deuxième phase, on réalise successivement les étapes d'extraction et mises en correspondance de caractéristiques avec le "sac de mots visuels", de reconnaissance d'objet, et d'estimation de pose 6D par mise en correspondance 2D/3D.

Cette approche permettant la reconnaissance d'objet et aussi l'estimation de la pose de la caméra présente cependant l'inconvénient de ne bien fonctionner que si le contexte change peu. Elle n'est pas robuste en cas de grand changement d'apparence de l'objet. On peut même se trouver en situation d'échec si l'objet est peu texturé ou très réfléchissant car non seulement les zones d'intérêt changent mais aussi les descripteurs locaux.

Ces dix dernières années, la concomitance des capacités de calcul et d'avancées théoriques clé ont permis l'émergence de techniques basées sur l'apprentissage profond en utilisant les modèles CNN (Réseau neural convolutif). Cette seconde approche basée CNN comprend une première partie convolutive fonctionnant comme un extracteur automatique de caractéristiques les plus pertinentes en fonction des données d'apprentissage.

La deuxième partie du CNN consiste à optimiser les coefficients du réseau pour minimiser l'erreur de classification en sortie. Les deux parties des CNN sont entraînées simultanément : on apprend à la fois les coefficients des noyaux de convolutions pour extraire des caractéristiques pertinentes, et la bonne combinaison de ces caractéristiques.

Deux catégories principales de méthodes basées sur CNN sont à distinguer. Les méthodes qui considèrent le problème d'estimation de pose 6D comme un problème de classification ou de régression de pose. Ces méthodes ne sont pas en mesure d'estimer une pose très précise. Les méthodes de la seconde catégorie s'appuient sur une représentation intermédiaire. Afin d'obtenir une plus grande précision, ces méthodes se basent sur la localisation de la projection des points 3D dans les images. A partir des coordonnées 3D de ces points, on peut facilement calculer une pose en faisant l'association de données 2D-3D.

L'article « Estimating 6D Pose From Localizing Designated Surface Keypoints » de Zelin Zhao et al. (arXiv:1812.01387v1 [cs.CV] 4 Dec 2018) divulgue une technique d'estimation de la pose 6D à partir d'une image RGB, dans laquelle on désigne un ensemble de points de surface qui correspondent à des zones d'intérêts détectées dans les images comme points-clés, on forme un détecteur de points-clés (KPD) pour les localiser, puis on effectue un algorithme de type PnP qui permet de calculer la pose 6D en fonction des données 2D. L'article de Zelin Zhao et al. ne traite pas le problème de sélection des points de surface les plus pertinents. L'étape de sélection de ces points est une étape cruciale permettant de pallier les limites de d'utilisation dans des conditions d'arrière-plan et d'éclairage fortement variables, ce qui est souvent le cas en environnement industriel.

Le document Loesch Angelique ET AL,"Localization of 3D objects using model-constrained SLAM", MACHINE VISION AND APPLICATIONS, vol. 29, n. 7, 30 juin 2018, pages 1041-1068, décrit un procédé de localisation d'objets 3D à l'aide d'un modèle et de points de contour orientés en 3D appelés «edgelets».

Le but de présente invention est de proposer un procédé de sélection de points de surface qui soit exploitable en environnement industriel et qui permette de réaliser un apprentissage exhaustif ayant un pouvoir de généralisation au-delà des données d'apprentissage.

### RESUME DE L'INVENTION

Cet objectif est atteint avec un procédé de sélection automatique de points 3D à partir d'un modèle CAO, pour la localisation 3D d'un objet industriel, comprenant les étapes suivantes:
- génération d'un modèle géométrique à partir du modèle CAO, comprenant un échantillonnage d'un ensemble de points 3D extraits à partir d'arrêtes franches dudit modèle CAO, de façon à générer des points 3D de surface,
- désignation en avance de points de vue de référence à partir d'une connaissance a priori des points de vue courants de la caméra,
- acquisition au moyen d'une caméra d'une pluralité d'images prises à partir de points de vue d'intérêt dudit objet,
- association de chaque image acquise à un point de vue de référence pour former des sous-ensemble d'images (partitions) et une identification pour chaque partition d'une image de référence,
- sélection pour chaque partition des n points 3D de surface, comprenant les étapes suivantes :
   - raffinement des poses caméras en utilisant le modèle géométrique et identification des associations de points de surface 3D avec des points 2D contours qui correspondent aux poses raffinées,
   - calcul d'un score pour chaque point 3D de surface en fonction du nombre de fois où ce point 3D de surface est un point de contour de correspondance,
   - projection et regroupement des points 3D de surface dans chaque image de référence,
   - sélection des n points 3D de surface ayant le meilleur score pour chacune des partitions.

Pour réaliser une localisation 3D d'un objet filmé par une caméra, on mesure les six degrés de liberté de la pose de la caméra par rapport à cet objet.

Lorsque le procédé de sélection selon l'invention est mis en œuvre dans une localisation selon les six degrés de liberté basée sur un réseau neural convolutionnel, il peut en outre avantageusement comprendre les étapes de :
- apprentissage d'un premier réseau neural convolutionnel pour la reconnaissance d'un point de vue d'intérêt de l'objet parmi un ensemble de points de vue de référence ;
- pour chaque partition, apprentissage de cartes de chaleur correspondant aux projections 2D des points 3D de surface sélectionnés.

Le procédé de sélection selon l'invention peut en outre comprendre une étape pour identifier par le premier réseau neural convolutionnel le point de vue le plus proche parmi six points de vue prédéfinis calculés automatiquement en fonction d'une fenêtre englobante (bounding box 3D) de l'objet 3D et de paramètres de calibrage de la caméra.

Ce procédé de sélection peut en outre comprendre une séquence de partitionnement comprenant les étapes suivantes :
- annotation des images pour chaque séquence d'apprentissage en lançant un tracking 3D,
- association à chaque image du point de vue de référence le plus proche en se basant sur des projections 2D des points 3D de surface et/ou des tests de visibilité,
- identification de p images de référence acquises à partir du point de vue le plus proche de p points de vue de référence., réalisant ainsi p partitions des images acquises.

Le procédé de sélection selon l'invention peut en outre comprendre une étape d'association d'une partition à chaque image dans le but d'apprendre un détecteur multi-classe, ainsi qu'une séquence d'apprentissage au cours de laquelle :
- on apprend un détecteur multi classe permettant de détecter l'objet industriel et de prédire sa répartition,
- pour chaque répartition, on entraîne un détecteur de points clés basé sur la localisation de cartes de chaleur.

Il est important de noter que toutes les étapes du procédé de sélection selon l'invention peuvent être mises en œuvre par un ou plusieurs ordinateurs exécutant un ou plusieurs logiciel implémentant ces étapes.

Suivant un autre aspect de l'invention, il est proposé une application du procédé de sélection selon l'invention pour la localisation d'un objet 3D industriel dont un modèle géométrique est généré hors ligne, comprenant les étapes suivantes :
- validation et raffinement d'une pose en utilisant le modèle géométrique, cette étape étant soumise à une initialisation préalable,
- génération d'une localisation 3D dudit objet,
- construction d'un modèle d'apparence dudit objet.

Dans une autre application du procédé de sélection selon l'invention, ce dernier peut en outre comprendre les étapes suivantes réalisées en ligne :
- construction d'un modèle d'apparence à partir de la pose ainsi raffinée,
- extraction de caractéristiques dans les cadres suivants et mise en correspondance avec ledit modèle d'apparence ,
- estimation d'une pose pour l'objet 3D,
- détermination d'un score de confiance pour ladite estimation de pose.

L'étape d'estimation de pose peut être suivie d'une étape qui est conditionnée par le niveau du score de confiance de la manière suivante :
- pour un score de confiance inférieure à une première valeur de seuil prédéterminée, réalisation d'une relocalisation 3D sur la base d'un ensemble des modèles d'apparence déjà produits,
- pour un score de confiance compris entre la première valeur de seuil et une valeur prédéterminée, raffinement puis validation de la pose en utilisant le modèle géométrique,
- pour un score de confiance supérieure à la seconde valeur prédéterminée, confirmation de la localisation 3D.

La réussite ou l'échec de l'étape de relocalisation 3D peut en outre conduire respectivement soit à une nouvelle construction d'un modèle d'apparence et une localisation 3D de l'objet, soit à une réinitialisation de l'étape de validation et de raffinement de la pose.

L'étape d'initialisation ou de réinitialisation préalable à l'exécution de l'étape de validation et raffinement de la pose peut en outre mettre en œuvre un module d'initialisation basé sur une architecture de réseau de neurones convolutionnel.

Suivant encore un autre aspect de l'invention, il est proposé un système de réalité augmentée exploitant des objets 3D localisés par mise en œuvre du procédé de sélection de points de surface selon l'invention.

L'outil de localisation d'objets industriels ainsi obtenu peut être mis en œuvre pour optimiser la performance globale des processus à forte complexité pour l'humain, en procurant une assistance numérique afin de guider les opérations sur le terrain et de capturer la réalité sur le terrain. Ceci permet d'optimiser l'exécution, le suivi et l'ingénierie des processus de production, de contrôle et de maintenance.

Cet outil d'opération avec assistance numérique permet de traiter des objets 3D industriels d'un bureau d'étude d'ingénierie à un atelier et réciproquement. Dans cet atelier, l'outil permet d'assister un opérateur sur le terrain dans des tâches complexes et de collecter des données de terrain, des résultats de contrôle qui sont ensuite exploitées au bureau d'étude à des fins d'optimisation. Des données numériques sont ensuite transférées via l'outil, telles que des modèles 3D, des instructions de travail et des informations contextualisées.

### DEFINITIONS

### CNN :

On entend par CNN (Convolutive Neural Network) un réseau de neurones convolutionnel.

### Edgelets (points 3D de surface) :

Les edgelets sont des points 3D extraits à partir des arrêtes franches du modèle 3D. Chaque edgelet a l'orientation 3D de l'arête franche à partir de laquelle elle a été extraite. Les edgelets sont des points susceptibles de donner des points de contours dans les images 2D de l'objet réel.

### Heatmap:

Une *Heatmap* (ou carte de chaleur) est une représentation graphique de données statistiques qui fait correspondre à l'intensité d'une grandeur variable une gamme de tons ou un nuancier de couleurs sur une matrice à deux dimensions. La technique de prédiction de Heatmap par CNN permet de capturer des caractéristiques locales et globales permettant de construire des KPD précis.

### Détecteur de points clés (KPD) :

Module logiciel permettant la localisation de points 2D par la prédiction de leurs cartes de chaleurs (heatmaps).

### Point de contour de correspondance:

Sont ici considérés comme Point de contour de correspondance les point 3D de surface (edgelets) qui sont projetées à partir de la pose de la caméra et qui correspondent à des points de contour dans les images.

### Modèle d'apparence :

Un modèle d'apparence est une représentation d'image caractérisée par un ensemble de descripteurs locaux d'apparence.

### Modèle géométrique :

Un modèle géométrique est généré directement à partir du CAO de l'objet. Il est caractérisé par un ensemble de points 3D de surface orientés en 3D.

### PnP :

PnP est l'acronyme de « Perspective-n-Point » et concerne des algorithmes pour l'estimation de la pose d'une caméra calibrée à partir d'un ensemble de n points 3D dans le monde et de leurs projections 2D correspondantes dans l'image.

### BREVE DESCRIPTION DES FIGURES

- [FIG.1]: La figure 1 est un schéma fonctionnel d'un exemple de réalisation du procédé de localisation 3D selon l'invention ;
- [FIG.2]: La figure 2 est un schéma fonctionnel d'une opération de tracking 3D mettant en œuvre les procédés de sélection de points de surface et de localisation 3D ;
- [FIG.3]: La figure 3 illustre un premier exemple de mise en œuvre du procédé de sélection de points de surface selon l'invention pour la prise de poses, appliqué à une pièce industrielle d'aéronautique ;
- [FIG.4]: La figure 4 illustre un second exemple de séquences de mise en œuvre du procédé de sélection de points de surface selon l'invention pour la prise de poses, appliqué à un carter d'automobile ;
- [FIG.5]: La figure 5 représente un troisième exemple de mise en œuvre du procédé de sélection de points de surface selon l'invention pour la prise de poses, appliqué à une pièce automobile ;
- [FIG.6]: La figure 6 illustre un ensemble d'images d'une même pièce automobile traitées dans le procédé de sélection de points de surface selon l'invention, qui ont été prises dans des conditions variables d'éclairage, d'arrière-plan et de pose ;
- [FIG.7]: La figure 7 illustre un ensemble d'edgelets sélectionnées automatiquement sous la forme de points de surface sur les arêtes franches de l'objet, après l'étape de clustering dans le procédé de sélection de points de surface selon l'invention ; et
- [FIG.8]: la figure 8 illustre un exemple d'utilisation d'un équipement de réalité augmentée mettant en œuvre une localisation 3D implémentant le procédé de sélection de points de surface selon l'invention.

### DESCRIPTION DETAILLEE

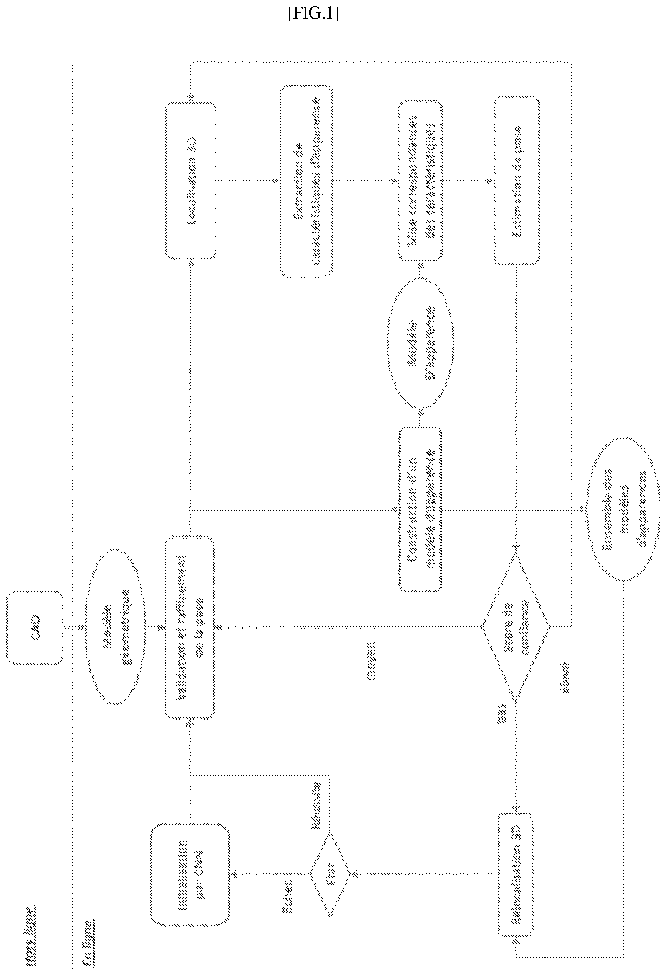

En référence à la figure 1, à partir du CAO, on génère un modèle géométrique. Un raffinement puis une validation de la pose de la caméra qui filme l'objet réel sont effectués en utilisant ce modèle. A partir de cette étape, on effectue une construction d'un modèle d'apparence et une localisation 3D.

A titre d'exemple non limitatif, le raffinement peut consister à optimiser la pose de la caméra en vue de maximiser le nombre de correspondances entre points 2D et points 3D. Il y a validation de la pose de la caméra dès lors qu'on dispose d'un ratio de correspondances supérieur à un seuil prédéterminé, par exemple 50% des points 3D visibles à partir du point de vue de la caméra.

Pour les images suivantes, on extrait des caractéristiques d'apparence puis on réalise une mise en correspondance des caractéristiques en se basant sur le dernier modèle d'apparence qui a été construit. Cette mise en correspondance est suivie d'une estimation de pose.

Si l'estimation de pose conduit à un score de confiance élevé, on effectue à nouveau l'étape de localisation 3D.

A titre d'exemple non limitatif, on peut déterminer le score de confiance comme étant un score de mise en correspondance de primitives (features) 2D entre le dernier modèle d'apparence et l'image en cours de traitement. Ce score peut être calculé comme étant le ratio du nombre de primitives mises en correspondance sur le nombre total de primitives détectées.

Si l'estimation de pose conduit à un score de confiance moyen, on effectue l'étape de raffinement puis validation de la pose et on génère un nouveau modèle d'apparence.

Si l'estimation de pose conduit à un score de confiance bas, on réalise une relocalisation 3D en s'appuyant sur l'ensemble des modèles d'apparence.

Si cette relocalisation 3D échoue, on utilise le module basé CNN pour l'estimation d'une pose, puis on réalise l'étape de raffinement et de validation de la pose.

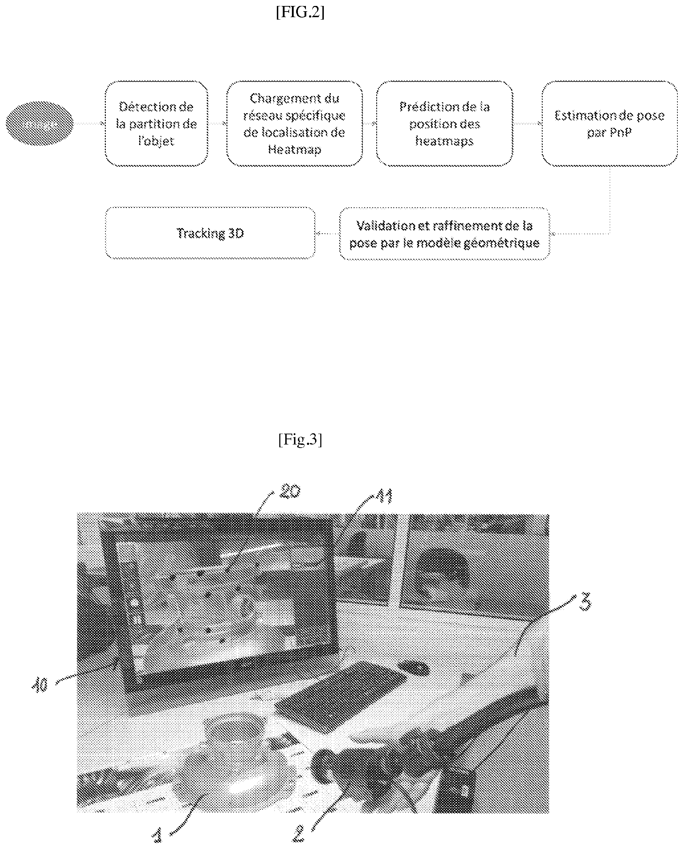

Si la relocalisation réussit, on réalise à nouveau une construction d'un modèle d'apparence. En référence à la figure 2, la méthode d'inférence CNN mise en œuvre dans le procédé de sélection de points selon l'invention comprend une détection de la partition d'un objet dans une image, suivie d'une étape de chargement du réseau spécifique de localisation de *Heatmap.* Une prédiction de la position des heatmaps est effectuée, suivie d'une estimation de pose par PnP. S'en suit une étape de raffinement et de validation de la pose par le modèle géométrique qui conduit à un tracking 3D.

Dans un exemple pratique de réalisation illustré par la figure 3, un système de localisation d'objet 3D industriel selon l'invention est implémenté dans un poste de travail 10 en vue de localiser une pièce industrielle 1.

En mode « hors ligne », un opérateur 3 a disposé une ou plusieurs caméras mobiles 2 afin de prendre un ensemble de vues de la pièce 1. Apparaît sur l'écran 11 du poste de travail 10, une représentation 3D de la pièce 1 issue du modèle CAO et sur cette représentation un ensemble de points de surface 20 qui ont été sélectionnés sur des arêtes franches de la pièce 1. Ce sont ces points de surface sélectionnés qui vont être utilisés ultérieurement pour la localisation de la pièce 3D dans un équipement de réalité augmentée porté par un opérateur sur le terrain dont la mission est d'intervenir sur une pièce industrielle du type de celle qui a été traitée par le procédé de sélection selon l'invention.

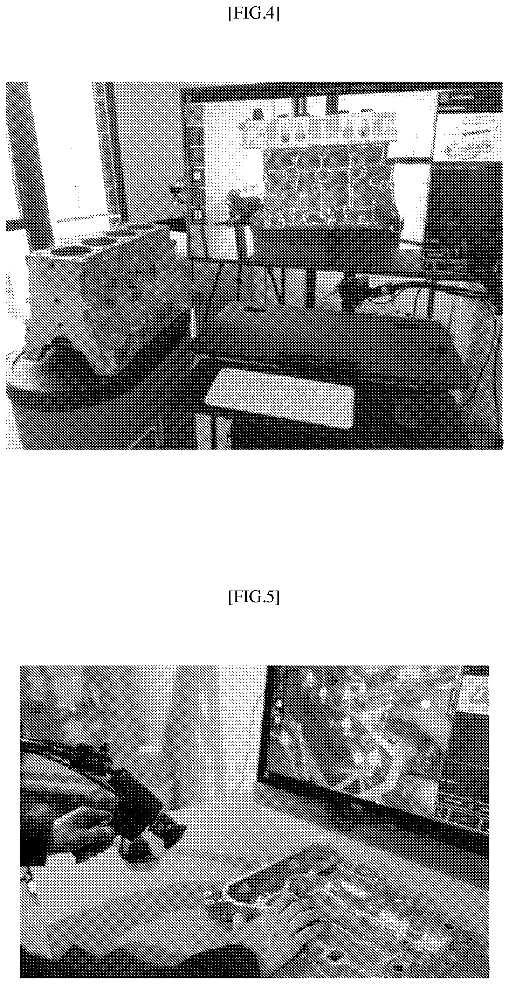

Cet équipement de prise de vue et de sélection de points de surface mettant en œuvre le procédé selon l'invention peut être mis en œuvre pour le traitement de toutes sortes d'objets industriels, par exemple un carter de moteur automobile (figure 4) ou une pièce industrielle obtenue par moulage ou injection (figure 5).

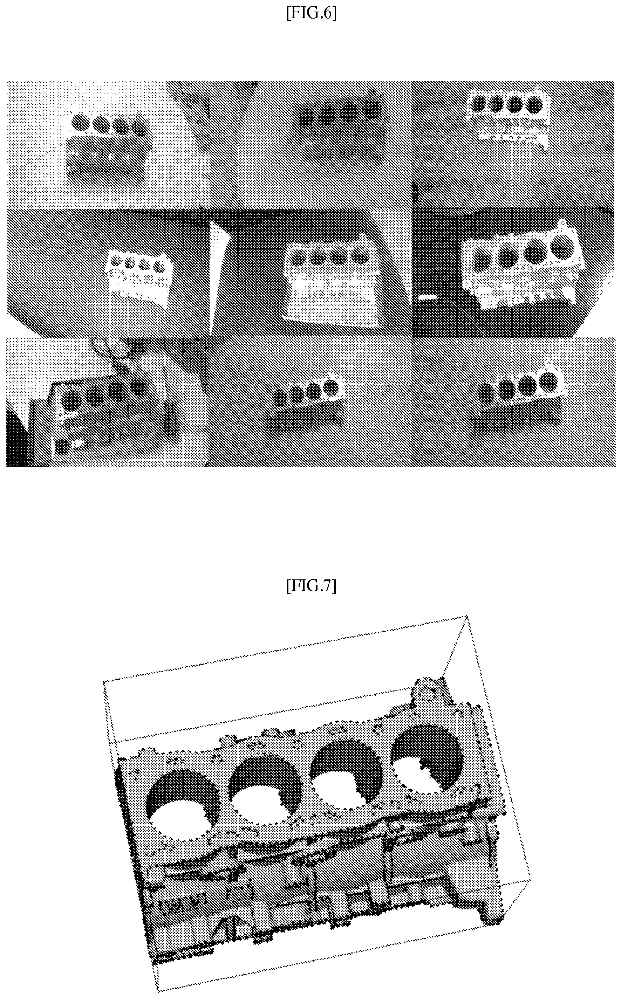

On va maintenant décrire une technique de partitionnement d'images mise en œuvre dans le procédé de sélection selon l'invention. Ces images peuvent avoir été prises dans des conditions variables d'éclairage, d'arrière-plan ou de pose, comme l'illustre la figure 6. La technique de partitionnement comprend les étapes suivantes :
- annotation des images pour chaque séquence vidéo d'apprentissage en lançant un tracking 3D, réalisant des pose-image,
- association à chaque image le point de vue de référence le plus proche en se basant sur des tests de visibilité et des projections 2D des edgelets,
- identification, de la même manière, de p images de référence associées aux p points de vue de référence les plus proches,
- association à chaque image l'image de référence la plus similaire en se basant sur des tests de visibilité et des projections 2D des edgelets, comme l'illustre la figure 5.

Pour la sélection des points de surface, on réalise pour chaque partition :
- un calcul d'un score pour chaque edgelet en fonction du nombre d'occurrences comme étant « *inlier* » (matching edgelet-contour) à partir d'une pose raffinée de la caméra pour chaque image,
- une projection et regroupement (clustering) des edgelets ayant un score supérieur au seuil dans p les images de références pour assurer une bonne répartition spatiale et ne garder que n partitions d'edgelets,
- une sélection des n edgelets ayant le meilleur score pour chacune des p répartitions ; comme l'illustre la figure 7.

On obtient ainsi n edgelets sélectionnées pour chaque partition.

A titre d'exemple non limitatif, ce score peut être simplement calculé comme étant le nombre d'occurrences. Si on a des séquences prises dans des environnements différents

(lumière ou positionnement), on peut effectuer le produit de la somme des occurrences dans chacune des séquences.

On va maintenant décrire un exemple de réalisation d'un apprentissage d'un réseau de neurones convolutionnel mis en œuvre dans le procédé de sélection selon l'invention.

### Préparation des données d'apprentissage

On associe tout d'abord une partition à chaque image dans le but d'apprendre un détecteur multi-classe, étape au cours de laquelle :
- on attribue une classe à chaque image
- on traite le problème de détection de face de l'objet comme une un problème de détection multi-classe

Pour chaque partition, on projette les n edgelets sélectionnées et on génère des images de *heatmaps.*

### Apprentissage

On apprend un détecteur multi classe permettant de détecter l'objet industriel et de prédire sa répartition. Pour chaque répartition, apprendre un KPD basé sur la localisation de *heatmaps.*

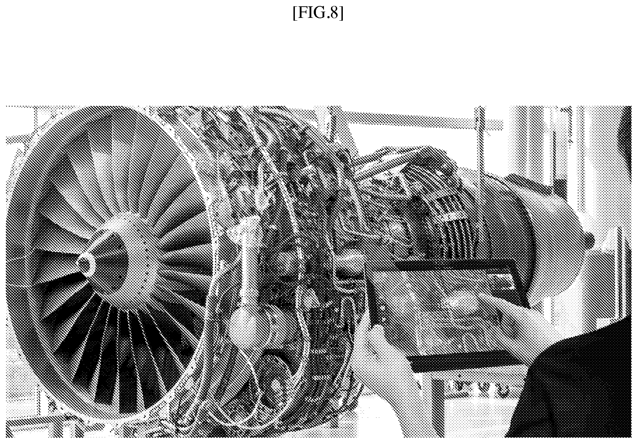

Le procédé de sélection selon l'invention peut être appliqué dans le domaine de l'assistance digitale, de l'exécution de fiches d'instructions virtuelles de production, de la traçabilité du montage, des relevés d'information et des vérifications de conformité, et tout particulièrement dans le domaine de la réalité augmentée comme l'illustre la figure 8. Grâce à une sélection pertinente de points de surface d'un système industriel complexe tel qu'un réacteur d'avion, la localisation précise d'objets 3D est rendue possible, ce qui procure un grand confort d'utilisation et une précision élevée dans les informations visualisées pour un opérateur de maintenance devant intervenir sur ces objets complexes. Bien sûr, la présente invention n'est pas limitée au mode de réalisation qui vient d'être décrit et de nombreux autres modes de réalisation peuvent être envisagés sans sortir du cadre de 1 invention comme définie dans les revendications.

## Revendications

1. Procédé mise en œuvre par ordinateur de sélection automatique de points 3D à partir d'un modèle CAO, pour la localisation 3D d'un objet industriel, comprenant les étapes suivantes:
- génération d'un modèle géométrique à partir du modèle CAO, comprenant un échantillonnage d'un ensemble de points 3D extraits à partir d arêtes franches dudit modèle CAO, de façon à générer des points 3D de surface,
- désignation en avance de points de vue de référence à partir d'une connaissance a priori des points de vue courants de la caméra,
- acquisition au moyen d'une caméra d'une pluralité d'images prises à partir de points de vue d'intérêt dudit objet,
- association de chaque image acquise à un point de vue de référence pour former des partitions et une identification pour chaque partition d'une image de référence,
- sélection pour chaque partition des n points 3D de surface extraits à partir des arêtes franches du modèle 3D et ayant l'orientation 3D de l'arête franche à partir de laquelle ils ont été extraits, comprenant les étapes suivantes :
- raffinement des poses caméras en utilisant le modèle géométrique et identification des associations de points de surface 3D avec des points 2D contours qui correspondent aux poses raffinées,
- calcul d'un score pour chaque point 3D de surface en fonction du nombre de fois où ce point 3D de surface est un point de contour de correspondance,
- projection et regroupement des points 3D de surface dans chaque image de référence,
- sélection des n points 3D de surface ayant le meilleur score pour chacune des partitions.

2. Procédé de sélection selon la revendication 1, mis en œuvre dans une localisation selon les six degrés de liberté basée sur un réseau neural convolutionnel, comprenant en outre les étapes de :
- apprentissage d'un premier réseau neural convolutionnel pour la reconnaissance d'un point de vue d'intérêt de l'objet parmi un ensemble de points de vue de référence ;
- pour chaque partition, apprentissage de cartes de chaleur correspondant aux projections 2D des points 3D de surface sélectionnés.

3. Procédé de sélection selon la revendication 2, **caractérisé en ce qu'**il comprend en outre une étape pour identifier par le premier réseau neural convolutionnel le point de vue le plus proche parmi six points de vue prédéfinis calculés automatiquement en fonction d'une fenêtre englobante (*bounding box 3D*) de l'objet 3D et de paramètres de calibrage de la caméra.

4. Procédé de sélection selon la revendication 3, **caractérisé en ce qu'**il comprend en outre une séquence de partitionnement comprenant les étapes suivantes :
- annotation des images pour chaque séquence d'apprentissage en lançant un tracking 3D,
- association à chaque image du point de vue de référence le plus proche en se basant sur des projections 2D des points 3D de surface et/ou des tests de visibilité,
- identification de p images de référence acquises à partir du point de vue le plus proche de p points de vue de référence., réalisant ainsi p partitions des images acquises.

5. Procédé de sélection selon la revendication 4, **caractérisé en ce qu'**il comprend en outre une étape d'association d'une partition à chaque image dans le but d'apprendre un détecteur multi-classe.

6. Procédé de sélection selon l'une quelconque des revendications 2 à 5 , **caractérisé en ce qu'**il comprend en outre une séquence d'apprentissage au cours de laquelle :
- on apprend un détecteur multi classe permettant de détecter l'objet industriel et de prédire sa répartition,
- pour chaque répartition, on entraîne un détecteur de points clés basé sur la localisation de cartes de chaleur.

7. Application mise en œuvre par ordinateur du procédé de sélection selon l'une quelconque des revendications précédentes pour la localisation d'un objet 3D industriel dont un modèle géométrique est généré hors ligne, comprenant les étapes suivantes :
- raffinement d'une pose d'une caméra filmant ledit objet en utilisant le modèle géométrique, cette étape étant soumise à une initialisation préalable, ledit raffinement comprenant une optimisation de la pose de la caméra en vue de maximiser le nombre de correspondances entre des points 2D contours et des points 3D,
- validation de la pose de la caméra dès lors qu'on dispose d'un ratio de correspondances supérieur à un seuil prédéterminé,
- génération d'une localisation 3D dudit objet,
- construction d'un modèle d'apparence dudit objet.

8. Application selon la revendication 7, **caractérisée en ce qu'**elle comprend en outre les étapes suivantes réalisées en ligne :
- construction d'un modèle d'apparence à partir de la pose ainsi raffinée,
- extraction de caractéristiques dans les cadres suivants et mise en correspondance avec ledit modèle d'apparence ,
- estimation d'une pose pour l'objet 3D,
- détermination d'un score de confiance pour ladite estimation de pose.

9. Application selon la revendication 8, **caractérisée en ce que** l'étape d'estimation de pose est suivie d'une étape qui est conditionnée par le niveau du score de confiance de la manière suivante :
- pour un score de confiance inférieure à une première valeur de seuil prédéterminée, réalisation d'une relocalisation 3D sur la base d'un ensemble des modèles d'apparence déjà produits,
- pour un score de confiance compris entre la première valeur de seuil et une seconde valeur prédéterminée, raffinement puis validation de la pose en utilisant le modèle géométrique,
- pour un score de confiance supérieure à la seconde valeur prédéterminée, confirmation de la localisation 3D.

10. Application selon la revendication 9, **caractérisée en ce que** la réussite ou l'échec de l'étape de relocalisation 3D conduit respectivement soit à une nouvelle construction d'un modèle d'apparence et une localisation 3D de l'objet, soit à une réinitialisation de l'étape de validation et de raffinement de la pose.

11. Application selon la revendication 10, **caractérisé en ce que** l'étape d'initialisation ou de réinitialisation préalable à l'exécution de l'étape de validation et raffinement de la pose met en œuvre un module d'initialisation basé sur une architecture de réseau de neurones convolutionnel.

12. Système de réalité augmentée exploitant des objets 3D localisés par mise en œuvre du procédé de sélection de points de surface selon l'une quelconque des revendications 1 à 6.

## Patentansprüche

1. Computerimplementiertes Verfahren zur automatischen Auswahl von 3D-Punkten aus einem CAD-Modell zur 3D-Lokalisierung eines industriellen Objekts, folgende Schritte umfassend:
- Erzeugung eines geometrischen Modells anhand des CAD-Modells, umfassend eine Abtastung eines Satzes von 3D-Punkten, die anhand von geraden Kanten des CAD-Modells extrahiert wurden, um 3D-Oberflächenpunkte zu erzeugen,
- vorherige Festlegung von Referenzblickpunkten anhand einer Vorabkenntnis der gängigen Blickpunkte der Kamera,
- Erlangung einer Vielzahl von Bildern, die von relevanten Blickpunkten des Objekts aus aufgenommen wurden, mittels einer Kamera,
- Zuordnung jedes erlangten Bildes zu einem Referenzblickpunkt, um Partitionen zu bilden, und Identifizierung eines Referenzbildes für jede Partition,
- Auswahl, für jede Partition, der n 3D-Oberflächenpunkte, die aus den geraden Kanten des 3D-Modells extrahiert wurden und die 3D-Ausrichtung der geraden Kante haben, aus der sie extrahiert wurden, umfassend die folgenden Schritte:
- Verfeinerung der Kameraposen unter Verwendung des geometrischen Modells und Identifizierung der Zuordnungen von 3D-Oberflächenpunkten zu 2D-Konturpunkten, die den verfeinerten Posen entsprechen,
- Berechnung einer Punktzahl für jeden 3D-Oberflächenpunkt in Abhängigkeit davon, wie oft dieser 3D-Oberflächenpunkt ein Übereinstimmungs-Konturpunkt ist,
- Projektion und Gruppierung der 3D-Oberflächenpunkte in jedem Referenzbild,
- Auswahl der n 3D-Oberflächenpunkte mit der besten Punktzahl für jede der Partitionen.

2. Auswahlverfahren nach Anspruch 1, das in einer Lokalisierung gemäß den sechs Freiheitsgraden auf der Grundlage eines neuronalen Faltungsnetzwerks implementiert wird, ferner die folgenden Schritte umfassend:
- Lernen eines ersten neuronalen Faltungsnetzwerks zur Erkennung eines interessierenden Blickpunkts des Objekts aus einem Satz von Referenzblickpunkten;
- für jede Partition, Lernen von Wärmekarten, die den 2D-Projektionen der ausgewählten 3D-Oberflächenpunkte entsprechen.

3. Auswahlverfahren nach Anspruch 2, **dadurch gekennzeichnet, dass** es ferner einen Schritt umfasst, bei dem durch das erste neuronale Faltungsnetzwerk der nächstgelegene Blickpunkt unter sechs vordefinierten Blickpunkten identifiziert wird, die automatisch in Abhängigkeit von einem umschließenden Fenster *(bounding box 3D)* des 3D-Objekts und von Kalibrierungsparametern der Kamera berechnet werden.

4. Auswahlverfahren nach Anspruch 3, **dadurch gekennzeichnet, dass** es ferner eine Partitionierungssequenz umfasst, welche die folgenden Schritte umfasst:
- Annotation der Bilder für jede Lernsequenz durch Starten einer 3D-Verfolgung,
- Zuordnung des nächstgelegenen Referenzblickpunkts zu jedem Bild auf der Grundlage von 2D-Projektionen der 3D-Oberflächenpunkte und/oder Sichtbarkeitstests,
- Identifizierung von p Referenzbildern, die vom am nächsten zu p Referenzblickpunkten gelegenen Blickpunkt erlangt wurden, wodurch p Partitionen der erlangten Bilder erstellt werden.

5. Auswahlverfahren nach Anspruch 4, **dadurch gekennzeichnet, dass** es ferner einen Schritt umfasst, bei dem jedem Bild eine Partition zugeordnet wird, um einen Multiklassen-Detektor zu lernen.

6. Auswahlverfahren nach einem der Ansprüche 2 bis 5, **dadurch gekennzeichnet, dass** es ferner eine Lernsequenz umfasst, in der:
- ein Multiklassen-Detektor gelernt wird, der es ermöglicht, das industrielle Objekt zu erkennen und seine Verteilung vorherzusagen,
- für jede Verteilung ein Schlüsselpunktdetektor auf der Grundlage der Lokalisierung von Wärmekarten trainiert wird.

7. Computerimplementierte Anwendung des Auswahlverfahrens nach einem der vorhergehenden Ansprüche zur Lokalisierung eines industriellen 3D-Objekts, von dem ein geometrisches Modell offline erzeugt wird, umfassend die folgenden Schritte:
- Verfeinerung einer Pose einer Kamera, die das Objekt filmt, unter Verwendung des geometrischen Modells, wobei dieser Schritt einer vorherigen Initialisierung unterliegt, wobei die Verfeinerung eine Optimierung der Kamerapose umfasst, um die Anzahl von Übereinstimmungen zwischen 2D-Konturpunkten und 3D-Punkten zu maximieren,
- Validierung der Pose der Kamera, sobald ein Übereinstimmungsverhältnis über einem vorgegebenen Schwellenwert liegt,
- Erzeugung einer 3D-Lokalisierung des Objekts,
- Konstruktion eines Aussehensmodells des Objekts.

8. Anwendung nach Anspruch 7, **dadurch gekennzeichnet, dass** diese ferner die folgenden online durchgeführten Schritte umfasst:
- Konstruktion eines Aussehensmodells anhand der so verfeinerten Pose,
- Extraktion von Merkmalen in den folgenden Frames und Abgleichen mit dem Aussehensmodell,
- Schätzung einer Pose für das 3D-Objekt,
- Bestimmung eines Konfidenzwertes für die Posenschätzung.

9. Anwendung nach Anspruch 8, **dadurch gekennzeichnet, dass** auf den Schritt der Posenschätzung ein Schritt folgt, der von der Höhe des Konfidenzwerts wie folgt abhängig ist:
- bei einem Konfidenzwert unter einem ersten vorgegebenen Schwellenwert, Durchführung einer 3D-Relokalisierung auf der Grundlage eines Satzes bereits erstellter Aussehensmodelle,
- bei einem Konfidenzwert, der zwischen dem ersten Schwellenwert und einem zweiten vorgegebenen Wert liegt, Verfeinerung, dann Validierung der Pose unter Verwendung des geometrischen Modells,
- bei einem Konfidenzwert, der über dem zweiten vorgegebenen Wert liegt, Bestätigung der 3D-Lokalisierung.

10. Anwendung nach Anspruch 9, **dadurch gekennzeichnet, dass** der Erfolg oder Misserfolg des 3D-Relokalisierungsschritts jeweils entweder zu einer neuen Konstruktion eines Aussehensmodells und einer 3D-Lokalisierung des Objekts oder zu einem Zurücksetzen des Validierungs- und Verfeinerungsschritts der Pose führt.

11. Anwendung nach Anspruch 10, **dadurch gekennzeichnet, dass** der Initialisierungs- oder Rücksetzungsschritt vor der Ausführung des Validierungs- und Verfeinerungsschritts der Pose ein Initialisierungsmodul implementiert, das auf einer neuronalen Faltungsnetzwerkarchitektur basiert.

12. Erweiterte-Realität-System, das 3D-Objekte nutzt die durch Implementierung des Verfahrens zur Auswahl von Oberflächenpunkten nach einem der Ansprüche 1 bis 6 lokalisiert werden.

## Claims

1. A computer-implemented method for automatically selecting 3D points from a CAD model, for 3D locating an industrial object, comprising the following steps:
- generating a geometric model from the CAD model, comprising a sampling of a set of 3D points extracted from straight edges of said CAD model, so as to generate 3D surface points,
- designating reference viewpoints in advance from a priori knowledge of the current viewpoints of the camera,
- acquiring, by means of a camera, a plurality of images taken from viewpoints of interest of said object,
- associating each acquired image with a reference viewpoint to form partitions and identifying a reference image for each partition,
- selecting for each partition of the n 3D surface points extracted from the straight edges of the 3D model and having the 3D orientation of the straight edge from which they were extracted, comprising the following steps:
- refining the camera poses using the geometric model and identifying the associations of 3D surface points with 2D contour points that correspond to the refined poses,
- calculating a score for each 3D surface point based on the number of times that this 3D surface point is a match contour point,
- projecting and clustering 3D surface points in each reference image,
- selecting the n 3D surface points having the best score for each of the partitions.

2. The selection method according to claim 1, implemented in a convolutional neural network-based six-degree-of-freedom location, further comprising the steps of:
- learning a first convolutional neural network to recognise a viewpoint of interest of the object among a set of reference viewpoints;
- for each partition, learning heat maps corresponding to the 2D projections of the selected 3D surface points.

3. The selection method according to claim 2, **characterised in that** it further comprises a step for identifying, by means of the first convolutional neural network, the closest viewpoint among six predefined viewpoints calculated automatically as a function of a 3D bounding box of the 3D object and camera calibration settings.

4. The selection method according to claim 3, **characterised in that** it further comprises a partitioning sequence comprising the following steps:
- annotating images for each learning sequence by launching 3D tracking,
- associating the nearest reference viewpoint with each image based on 2D projections of 3D surface points and/or visibility tests,
- identifying p reference images acquired from the viewpoint closest to p reference viewpoints, thus producing p partitions of the acquired images.

5. The selection method according to claim 4, **characterised in that** it also comprises a step of associating a partition with each image for the purpose of learning a multi-class detector.

6. The selection method according to any one of claims 2 to 5, **characterised in that** it also comprises a learning sequence during which:
- a multi-class detector is learned, allowing detection of the industrial object and prediction of its distribution,
- for each distribution, a keypoint detector is trained based on the location of heat maps.

7. A computer-implemented application of the selection method according to any one of the preceding claims for locating an industrial 3D object, a geometric model of which is generated offline, comprising the following steps:
- refining a pose of a camera filming said object using the geometric model, this step being subject to prior initialisation, said refining comprising optimising the camera pose in order to maximise the number of correspondences between 2D contour points and 3D points,
- validating the camera pose when obtaining a match ratio higher than a predetermined threshold,
- generating a 3D location of said object,
- constructing an appearance model of said object.

8. The application according to claim 7, **characterised in that** it also comprises the following steps carried out online:
- constructing an appearance model from the pose thus refined,
- extracting features in the following frames and matching with said appearance model,
- estimating a pose for the 3D object,
- determining a confidence score for said pose estimate.

9. The application according to claim 8, **characterised in that** the pose estimation step is followed by a step that is conditioned by the level of the confidence score in the following way:
- for a confidence score lower than a first predetermined threshold value, performing a 3D relocation based on a set of appearance models already produced,
- for a confidence score comprised between the first threshold value and a second predetermined value, refining, then validating the pose using the geometric model,
- for a confidence score greater than the second predetermined value, confirming the 3D location.

10. The application according to claim 9, **characterised in that** the success or failure of the 3D relocation step leads respectively either to a new construction of an appearance model and a 3D location of the object, or to a re-initialisation of the pose validation and refinement step.

11. The application according to claim 10, **characterised in that** the initialisation or re-initialisation step prior to the execution of the pose validation and refinement step implements an initialisation module based on a convolutional neural network architecture.

12. An augmented reality system exploiting 3D objects located by implementing the surface point selection method according to any one of claims 1 to 6.
